# EUROPÄISCHE PATENTSCHRIFT

(11) **EP 3 450 227 B1**
(45) Veröffentlichungstag und Bekanntmachung des Hinweises auf die Patenterteilung: **05.01.2022**
(21) Anmeldenummer: 18191871.5
(22) Anmeldetag: 31.08.2018
(51) Int. Cl.: B60H 1/00

(54) **TEMPERATURREGULATIONSSYSTEM**
TEMPERATURE REGULATION SYSTEM
SYSTÈME DE RÉGULATION DE TEMPÉRATURE

(30) Priorität: 01.09.2017 DE 102017120195
(43) Veröffentlichungstag der Anmeldung: 06.03.2019
(73) Patentinhaber: Hochschule Rheinmain University of Applied Sciences Wiesbaden Rüsselsheim, 65197 Wiesbaden (DE); Konvekta Aktiengesellschaft, 34613 Schwalmstadt-Ziegenhain (DE)
(72) Erfinder: Dimova, Daniela, 65779 Kelkheim (DE); Rusche, Stefan, 55278 Ludwigshöhe (DE); Sonnekalb, Michael, 34613 Schwalmstadt (DE); Best, Pascal, 34633 Ottrau (DE)
(74) Vertreter: Stumpf, Peter

(56) Entgegenhaltungen:
- EP-A2- 0 431 760
- WO-A1-2016/043913
- DE-A1- 19 530 609
- DE-A1-102013 017 464
- DE-U1-202010 007 146

## Beschreibung

Die vorliegende Erfindung betrifft ein Temperaturregulationssystem zur Regulation des Wärmeflusses für Fahrzeuge mit einem Kältemittelkreislauf, sowie ein Fahrzeug mit einem solchen Temperaturregulationssystem.

### Beschreibung und Einleitung des allgemeinen Gebietes der Erfindung

Elektro- und Hybridfahrzeuge spielen eine bedeutende Rolle für die Weiterentwicklung einer emissionsarmen Mobilität. Auch für den geplanten Ausbau einer Versorgung mit regenerativen Energien sind sie äußerst wichtig, da auch volatil anfallende Energiemengen (Wind- und Solarstrom) durch die Batteriespeicher gepuffert und später genutzt werden können. So wirken Elektrofahrzeuge stabilisierend auf die Stromverteilnetze. Der Verkehrssektor und die Stromerzeugung können gewinnbringend gekoppelt werden. Als Hemmnis für eine nennenswerte Verbreitung der Elektromobilität wird die geringe Reichweite gesehen, die durch die Kapazitäten aktuell verwendeter Batterien begrenzt ist. In den letzten Jahren konnten die Produktionskosten für die Bereitstellung von Batterien stark gesenkt werden. Dies ändert jedoch nichts an dem Problem der eingeschränkten Reichweite. Durch die Nutzung von Beheizungs- oder Klimatisierungsvorrichtungen wird diese Reichweite im Betrieb unter wirklichen Umweltbedingungen im Vergleich zur theoretischen Reichweite unter Laborbedingungen noch weiter reduziert.

### Stand der Technik

Im Stand der Technik sind verschiedene Lösungsansätze beschrieben, um die Nutzung von Beheizungs- oder Klimatisierungsvorrichtungen für Fahrzeuge energieeffizienter zu gestalten. Ein Ansatz liegt im Einsatz von Wärmespeichern.

Wärmespeicher dienen dazu überschüssige Wärme von Wärmequellen temporär zu speichern. Bei Bedarf wird die im Wärmespeicherkörper gespeicherte Wärme abgegeben und zur Erwärmung von Systemkomponenten des Fahrzeugs (z.B. zur Fahrgastzellenbeheizung) verwendet. Als Wärmespeicher werden oftmals Speicher, die in der Lage sind, auch latente Wärme zu speichern, eingesetzt. Als latente Wärme bezeichnet man die bei einem Phasenübergang aufgenommene oder abgegebene Energiemenge (Wärme). Während des Phasenübergangs ändert sich die Temperatur nicht. Die speicherbare Energiemenge hängt dabei von der Art des Phasenüberganges und des Stoffes sowie von seiner Menge ab. Dadurch wird die Menge der in dem Wärmespeicherkörper gespeicherten Wärme erhöht, während das Gewicht des Wärmespeicherkörpers niedrig gehalten wird. Ein Latentwärmespeicher ist ein Wärmespeicher, der die Aufnahme von Wärme für eine Zustandsänderung verwendet. Dies ist beispielsweise die Änderung von einem festen in einen flüssigen Zustand und zurück.

Latentwärmespeicher (oftmals auch als latente Wärmespeicher bezeichnet) speichern die thermische Energie durch den Wechsel des Aggregatzustandes (fest-flüssig oder flüssig-dampfförmig) des Speichermaterials. Diese Materialen werden auch als Phasenwechselmaterialen oder PCMs (phase-change material) bezeichnet.

Beispiele sind hier Wasser mit einer Erstarrungstemperatur von 0°C und einer Schmelzenthalpie 334 kJ/kg, oder Hartparaffin mit einer Schmelztemperatur von etwa 60 °C und einer Schmelzenthalpie zwischen etwa 200 und 240 kJ/kg.

Generell lassen sich alle Phasenwechsel ausnutzen, doch technisch sinnvoll einsetzbar sind nur der Schmelz- bzw. der Erstarrungsprozess. Die Temperatur von Reinstoffen bleibt während des Schmelzprozesses konstant, da bei dieser Art von Speicherung die thermische Energie vollständig in den Phasenwechsel investiert wird. Latentwärmespeicher erhöhen die Energiedichte gegenüber Speichern, bei denen auf einen Phasenwechsel verzichtet wird. Die Nutzungsmöglichkeiten werden durch den Einsatz von mehreren Speichern bei unterschiedlichen Phasenwechseltemperaturen vervielfältigt.

Wärmepumpen zu Beheizungszwecken sind bekannt und werden bereits in Fahrzeugen eingesetzt. Der von verbrennungsmotorisch angetriebenen Fahrzeugen gewohnte Heizungskomfort kann auch in Elektrofahrzeugen erzielt und auch länger aufrechterhalten werden, wenn die Zahl der nutzbaren Wärmequellen steigt. Bisher wird jedoch ausschließlich Umweltwärme dazu genutzt. Wärme aus vor oder auch während der Fahrt geladenen thermischen Speichern ermöglicht zusätzlichen Komfort. Potenzial bietet auch die Einbindung des Thermomanagements der Fahrzeugbatterien in solche Wärmepumpen-Konzepte. Das hat einen positiven Effekt auf die Kapazität und damit auf die Reichweite und auch auf die Lebensdauer der Batterie. Darüber hinaus kann auch Abwärme aus elektrischen Leistungsbauteilen oder aber Rekuperationsenergie aus Bremsvorgängen genutzt werden.

In der jüngeren Vergangenheit gab es Anstrengungen u.a. von verschiedenen Automobilherstellern bzw. von deren Zulieferern, neben dem Kühlmittelkreislauf weitere Speicher, i.e. Latentwärmespeicher, jedoch ohne Wärmepumpen, in Fahrzeugen mit Verbrennungsmotoren zu integrieren. Unter anderem wurde damit
- die Warmlaufphase nach dem Kaltstart verkürzt oder aber
- die Klimatisierungsmöglichkeit bei Fahrzeugen mit Start-Stopp-Funktion ausgedehnt.

DE 10 2010 018 906 A1 beschreibt ein Temperatursteuerungssystem für einen Fahrgastraum eines Fahrzeugs mit einem Wärmespeicher, der mit elektrischer Energie versorgt werden kann. Bei dem Wärmespeicher kann es sich z. B. um einen Latentwärmespeicher handeln. Der Latentwärmespeicher kann bei abgestelltem Fahrzeug von einer externen elektrischen Stromquelle aufgeheizt werden.

Diese Lösung weist eine geringe Flexibilität bei der Anpassung von Wärmeaufnahme und -abgabe auf. Dies führt zu einem erhöhten Energiebedarf des Temperatursteuerungssystems und somit zu erhöhten Betriebskosten.

Zur Verbesserung der Wärmeübertragung in Latentwärmespeichern sind zahlreiche Verfahren und Vorrichtungen bekannt. Der Absenkung der Temperatur des Wärme abgebenden Mediums wurde beispielsweise in der DE 10 2008 033 527 A1 begegnet, indem verschiedene Phasenwechselmaterialien durchströmt wurden. Das Problem der unzureichenden Nutzung der Wärmespeicherkapazität wurde in der hier beschriebenen Anwendung bisher jedoch nicht gelöst.

Keine der bisherigen Lösungen nutzt die Möglichkeiten von Latentwärmespeichern optimal aus. Das liegt daran, dass diese durch eine unzureichende Steuerung nicht optimal be- bzw. entladen werden können insbesondere, weil es nicht möglich ist den Kältemittelkreislauf reversibel d.h. umkehrbar zu gestalten.

Die Schrift DE 102013017464 A1 ist ein Temperaturregulationssystem mit wenigstens zwei Latentwärmespeichern mit unterschiedlichen Arbeitspunkten zur Temperaturregulierung eines Fahrzeugs, z. B. zum Erwärmen bzw. Kühlen wenigstens einer Fahrzeugkomponente, insbesondere des Antriebs- und Energiespeichersystems oder des Fahrzeuginnenraums, insbesondere des Fahrgastraums. Die Komponenten umfassen Motor, Energiespeicher (z. B. Batterie oder Tank), Bremsen und den Fahrgastraum.

### Aufgabe

Aufgabe der vorliegenden Erfindung ist es ein steuerbares reversibel betreibbares Temperaturregulationssystem zur energiesparenden Klimatisierung (Beheizung und Kühlung) von Fahrzeugen bereitzustellen.

### Lösung der Aufgabe

Diese Aufgabe wird durch die Merkmale des Patentanspruches 1 gelöst. Vorteilhafte Ausgestaltungen und Weiterbildungen der Erfindung sind den Unteransprüchen zu entnehmen.

### Wichtige Begriffe im Rahmen dieser Anmeldung:

Kältemittelkreislauf:
   Ein Kältemittelkreislauf ist ein geschlossenes von einem Fluid durchströmbares System. Durch einen Kältemittelkreislauf strömt ein auch als Kältemittel bezeichnetes Fluid, das Wärmeenergie von einem Wärmespeicher aufnehmen und abgeben kann.
Wärmeübertrager:
   Ein Wärmeübertrager ist ein Apparat, der thermische Energie von einem Stoffstrom auf einen anderen überträgt. Das Material, aus dem der Wärmeübertrager besteht, muss für eine gute Effizienz eine gute Wärmeleitung und die damit gefertigte Vorrichtung selbst eine große Oberfläche aufweisen. Weiter muss der Wärmeübergang zwischen den Oberflächen des Wärmertragers und den strömenden Medien, zwischen denen er Wärme überträgt, möglichst gut sein.

Wärmeübertrager bestehen in den meisten Fällen aus Metall, jedoch auch aus Emaille, Kunststoff, Glas oder Siliciumcarbid. Im Klimabereich kommt überwiegend Kupfer und Aluminium aufgrund der guten Wärmeleitfähigkeit zum Einsatz. In der Industrie werden vor allem Stahl und hier besonders Edelstahl eingesetzt, da die Beständigkeit der Materialien benötigt wird. Heizkörper hingegen werden heute meist aus Stahlblech, früher aus Grauguss hergestellt. Kunststoff, Emaille, Glas oder Siliciumcarbid werden für Wärmeübertrager in der chemischen Industrie eingesetzt. Ein Wärmeübertrager wird auch Wärmetauscher oder Wärmeaustauscher genannt.

Gegenstand der Erfindung ist ein Temperaturregulationssystem 100 für Fahrzeuge. Das erfindungsgemäße Temperaturregulationssystem 100 umfasst wenigstens einen Kältemittelkreislauf 80. Dieses System ist geeignet zur Verwendung mit einem als Kältemittel dienenden ersten Fluid 85. Geeignete Kältemittel sind dabei Ammoniak (R-717), Tetrafluorethan (R134a), Kohlenstoffdioxid (R-744) oder Wasser (R-718). Letzteres kann auch noch Korrosionsschutz- und/oder Frostschutzmittel enthalten. Andere Übertragungsmedien wie beispielsweise Öle oder Alkohole sind auch möglich. Der Kältemittelkreislauf arbeitet dabei nach dem Prinzip einer Wärmepumpe.

Dabei umfasst der erste Kältemittelkreislauf 80 wenigstens einen ersten Wärmespeicher 10, enthaltend ein Phasenwechselmaterial mit einer Phasenwechseltemperatur von unter 30 °C (bevorzugt ca. -10 bis +10 °C) und wenigstens einen zweiten Wärmespeicher 15, enthaltend ein Phasenwechselmaterial mit einer Phasenwechseltemperatur von über 30 °C (bevorzugt ca. 60 °C +/- 10 K).

Weiterhin umfasst der Kältemittelkreislauf 80 wenigstens einen ersten Wärmeübertrager 12 und wenigstens einen zweiten Wärmeübertrager 17. Dabei ist der erste Wärmeübertrager 12 so ausgebildet, dass er einen Wärmetransfer zwischen dem Kältemittelkreislauf 80 und einem zweiten Fluid 75 ermöglicht.

Alternativ ist der erste Wärmeübertrager 12 so ausgebildet, dass er einen Wärmetransfer zwischen dem Kältemittelkreislauf 80 und einem dritten Fluid 95 ermöglicht.

Das zweite Fluid 75 kann dabei beispielsweise Wasser oder ein anderes Kühlmittel sein, welches der Kühlung des Motors oder einer anderen Fahrzeugkomponente dient und in einem Kühlmittelkreislauf zirkuliert. Alternativ kann es sich um Luft z.B. im Fahrzeuginnenraum handeln.

Das dritte Fluid 95 kann dabei beispielsweise Luft sein, die sich entweder in der Fahrzeugumgebung oder dem Fahrzeuginnenraum befindet und die eine Wärmesenke oder Wärmequelle darstellt. Alternativ kann es sich um Wasser oder ein Kühlmittel handeln.

Der zweite Wärmeübertrager 17 ist so ausgebildet, dass er einen Wärmetransfer zwischen dem Kältemittelkreislauf 80 und einem dritten Fluid 95 ermöglicht.

Alternativ ist der zweite Wärmeübertrager 17 so ausgebildet, dass er einen Wärmetransfer zwischen dem Kältemittelkreislauf 80 und einem zweiten Fluid 75 ermöglicht.

Der Kältemittelkreislauf 80 umfasst weiterhin Steuerungsmittel 86, 87, 120,110, um die Richtung und die Stärke des Wärmetransfers zwischen dem Wärmeübertrager 12 und dem Wärmeübertrager 17 einzustellen, sodass der Kältemittelkreislauf 80 einen steuerbaren und reversibel betreibbaren Wärmetransfer zwischen einem zweiten Fluid 75 und einem dritten Fluid 95 durchführen kann.

Als Steuerungsmittel 86, 87, 120,110 dienen dabei beispielsweise ein Paar entgegensetzt ausgerichtete Regelventile bestehend aus einem ersten Expansionsventil 86 und einem zweiten Expansionsventil 87, ein Vierwegeumschaltventil 120 und ein Verdichter 110. Die Regelventile sind dabei bevorzugt als Hochdruckventile ausgeführt. Zur Steuerung der Stärke wird normalerweise zuerst die Drehzahl des Verdichters 110 im Kältemittelkreislauf verändert.

Die Arbeitsweise der Regelventile ist dabei folgende: Eine Druckänderung durch das Öffnen bzw. Schließen der Regelventile erhöht die treibende Temperaturdifferenz ΔT und damit die Wärmemenge, die abgegeben wird. Die Temperaturdifferenz ΔT ist dabei eine vorgegebene Größe. Der Hauptteil der Temperaturveränderung wird über die Verdichterleistung des Verdichters 110 bestimmt. Die Regelventile 86, 87 befinden sich in Funktion und Lage ähnlich einem Verflüssigungsdruckregler bei herkömmlichen Kältemitteln hinter den Wärmespeichern 10, 15. Damit ist die Temperatur bzw. der Druck beim Kältemittelaustritt aus dem Wärmespeichern 10, 15 beeinflussbar. Das ermöglicht es, die Richtung und die Stärke des Wärmetransfers zwischen dem Wärmeübertrager 12 und dem Wärmeübertrager 17 zu regulieren.

Das als Kältemittel dienende erste Fluid 85 kann Wärme über den Wärmübertrager 17 an ein zweites Fluid 75, welches z.B. durch einem Fluidkreislauf 70 strömt, oder auf einem niedrigeren Temperaturniveau auch über den Wärmeübertrager 12 an das dritte Fluid 95 in die Umgebung abgeben. Das funktioniert jedoch nicht gleichzeitig. Der Prozess im Kältemittelkreislauf benötigt eine Wärmequelle, so dass das als Kältemittel dienende erste Fluid 85 verdampft werden kann. Das heißt, dass in Reihe vor dem Expansionsventil angeordnete zwei Wärmeübertrager benötigt werden, wenn die Wärme sowohl an ein zweites Fluid 75 z.B. in einen Fluidkreislauf 70 als auch an ein drittes Fluid 95 z. B. Luft abgeben werden soll. Das ist bei der Verwendung von CO₂ als Kältemittel sogar sehr wichtig, da es bei der Wärmeabgabe zu einer deutlichen Temperaturabnahme kommt. Ein Schmelzen eines Phasenwechselmaterials des Wärmespeichers ist dann nur im höheren Temperaturbereich möglich und anschließend muss noch weitere Wärme abführt werden. Das bedeutet, dass das Kältemittel nach dem Passieren des Verdichters 110 zuerst an den zweiten Wärmespeicher 15 mit Phasenwechselmaterial mit einer Phasenwechseltemperatur von über 30 °C Wärme überträgt und dann erst an den ersten Wärmespeicher 10 mit Phasenwechselmaterial mit einer Phasenwechseltemperatur von unter 30 °C.

Bei reversibler Wärmepumpenausführung werden die Richtungen der Wärmeübertragung vertauscht. Die Wärmeübertragung ist durch entsprechende Schaltelemente wie z.B. ein Vierwegeumschaltventil 120 zu dosieren.

Die Steuerung der Richtung und der Stärke des Wärmetransfers kann dabei zum einen in Abhängigkeit des Füllstandes der Wärmespeicher erfolgen. Das heißt, es ist möglich, diese gezielt zu laden oder zu entladen und beispielsweise Phasen besonders hoher oder niedriger Umgebungstemperaturen zu überbrücken.

Weiterhin kann die Steuerung der Richtung (und der Stärke) des Wärmetransfers in Abhängigkeit von der Temperatur des zweiten Fluides 75 oder des dritten Fluides 95 erfolgen. Dies ist zum Beispiel der Fall, wenn die Außentemperatur und/oder die Fahrzeugtemperatur sich stark ändern.

Bevorzugt ist jeder der Wärmespeicher 10, 15 direkt mit je einem Wärmeübertrager thermisch 12, 17 gekoppelt. Das ermöglicht einen direkten Wärmetransfer zwischen je einem Wärmespeicher 10,15 und einem Wärmeübertrager 12,17. Damit kann die Speicherkapazität der Wärmespeicher 10, 15 besonders gut genutzt werden.

Weiterhin ist es möglich, dass die Wärmequellen/senken unabhängig von Wärme-übertragern 12, 17 mit weiteren Wärmeübertrager für weitere Fluide thermisch gekoppelt sind.

In einer ersten Alternative der Erfindung umfasst das Temperaturregulationssystem 100 weiterhin einen ersten Fluidkreislauf 70, der so ausgebildet ist, dass er Wärme über den zweiten Wärmeübertrager 17 abgeben oder aufnehmen kann.

Dazu umfasst dieser Fluidkreislauf 70 ein als Heiz-und/oder Kühlmittel dienendes zweites Fluid 75 wie z.B. Wasser. Dieser Fluidkreislauf 70 umfasst weiterhin eine Vorrichtung, um dieses Fluid zu bewegen, wie beispielsweise eine Umwälzpumpe 76 und einen Wärmeübertrager 77, um Wärme abzugeben oder aufzunehmen. Die Wärmeaufnahme bzw. Wärmeabgabe kann dabei an wenigstens eine erste externe Wärmequelle/Wärmesenke 150 z.B. eine Heizung und/oder einen Fahrzeugmotor erfolgen.

Dies ermöglicht es, über den ersten Fluidkreislauf 70, den reversibel betreibbaren und steuerbaren Kältemittelkreislauf 80 und den zweiten Fluidkreislauf 90 gezielt Wärme zwischen den verschiedenen Wärmequellen und Wärmesenken eines Fahrzeugs zu transferieren. Dieser Fluidkreislauf 70 kann als Heiz-oder als Kühlkreislauf betrieben werden.

In einer zweiten Alternative der Erfindung umfasst das erfindungsgemäße Temperaturegulationssystem 100 weiterhin einen zweiten Fluidkreislauf 90. Dieser ist zur Aufnahme eines dritten Fluides 95 geeignet und ist so ausgebildet, dass er Wärme vom ersten Wärmeübertrager 12 aus dem Kältemittelkreislauf 80 aufnehmen oder abgeben kann. Die Wärmeaufnahme bzw. Wärmeabgabe kann dabei an wenigstens eine zweite externe Wärmequelle/Wärmesenke 160 z.B. den Fahrzeuginnenraum und/oder an die Außenluft erfolgen.

Dazu umfasst dieser zweite Fluidkreislauf 90 das als Heiz-und/oder Kühlmittel dienende dritte Fluid 95 wie z.B. Wasser. Der Fluidkreislauf 90 umfasst weiterhin eine Vorrichtung, um dieses Fluid zu bewegen, wie beispielsweise eine Umwälz-pumpe 96 und einen Wärmeübertrager 97, um Wärme abzugeben oder aufzunehmen.

Erfindungsgemäß enthält wenigstens einer der Fluidkreisläufe (70, 90) eine Phasenwechselmaterial-Emulsion als Phasenwechselmaterial. Dieses dient als zusätzlicher Wärmespeicher.

In einer zweiten Ausführungsform des erfindungsgemäßen Temperaturregulationssystems 100 umfasst der Kältemittelkreislauf 80 wenigstens ein Verbindungselement zur Integration wenigstens einer Wärmequelle und/oder -senke (z.B. Energieaufnahme beim rekuperativen Bremsen, Batterien) in das Temperaturregulationssystem 100. Das Verbindungselement ist dabei so ausgebildet, dass es thermisch mit dem Kältemittelkreislauf 80 gekoppelt ist.

Eine Möglichkeit zur Verbesserung des Wärmeübergangs auf das Speichermaterial bieten sogenannte PCS (Phase Change Slurries oder kurz: Slurries, im Deutschen als Phasenwechselmaterial-Emulsionen bezeichnet). Hier wird mikroverkapseltes Phasenwechselmaterial (PCM) in ein Fluid (meistens Wasser) gegeben, das den kompletten Heiz- oder Kühlkreis füllt. Die Kapselung nimmt die Volumenänderungen der PCM auf, so dass es im Speicher nicht zu Lufteinschlüssen infolge von Phasenwechseln kommen kann.

In einer dritten Ausführungsform des erfindungsgemäßen Temperaturregulationssystems 100 umfasst dieses Kohlenstoffdioxid als erstes Fluid 85.

Dies bewirkt eine langfristige Verwendbarkeit des Temperaturregulationssystems 100, da Kohlenstoffdioxid im Gegensatz zu anderen bisher üblichen Kältemitteln z.B. R 134 weniger klimawirksam ist.

Durch die Verwendung von CO₂ ist insbesondere bei der isobaren Wärmeabgabe auf das schnell sinkende Temperaturniveau zu achten. In der Regel erfolgt die Wärmeabgabe oberhalb der kritischen Temperatur von 31 °C - eine Kondensation ist dann nicht mehr realisierbar. Selbst wenn ein in solchen Kältemittelkreisläufen häufig verwendeter innerer Wärmeübertrager Wärme an das CO₂ hinter dem Verdampfer abgibt, ist bei diesen Temperaturen eine Verflüssigung nicht möglich. Der Kältemittelkreislauf 80 gibt je nach Fluidrichtung Wärme über den Gaskühler 12 oder 17 des Kältemittelkreislaufs ab, bis der Wärmespeicher 10 oder 15 aufgefüllt ist. Über einen zweiten Wärmeübertrager in Reihenschaltung in der Lage nach dem Gaskühler, aber vor dem Expansionsventil 86 oder 87, wird die Restwärme dann an die Umgebungsluft abgegeben.

Die Wärmeaufnahme erfolgt aus dem Verdampfer über das zweite Fluid 75 oder von der Umgebung (hier: Luft) über den Wärmetauscher 12. Das zweite Fluid 75 kann dabei ein Frostschutzmittel wie z.B. Glykol enthalten. Das Frostschutzmittel im Fluidkreislauf 70 verhindert das Einfrieren des zu pumpenden Fluides.

In einer vierten Ausführungsform des erfindungsgemäßen Temperaturregulationssystems 100 weist einer der Wärmespeicher 10, 15 wenigstens ein Phasen-wechselmaterial aus der Gruppe: Palmitinsäure, Stearinsäure, Rubitherm (RT64HC) und/oder Stearylalkohol auf.

Als Phasenwechselmaterial für den ersten Wärmespeicher mit einer Phasenübergangstemperatur von unter 30 °C eignen sich Materialen wie z.B. Wasser/Glykol-Mischungen, Rubitherm RT 5 HC, Rubitherm RT -4.

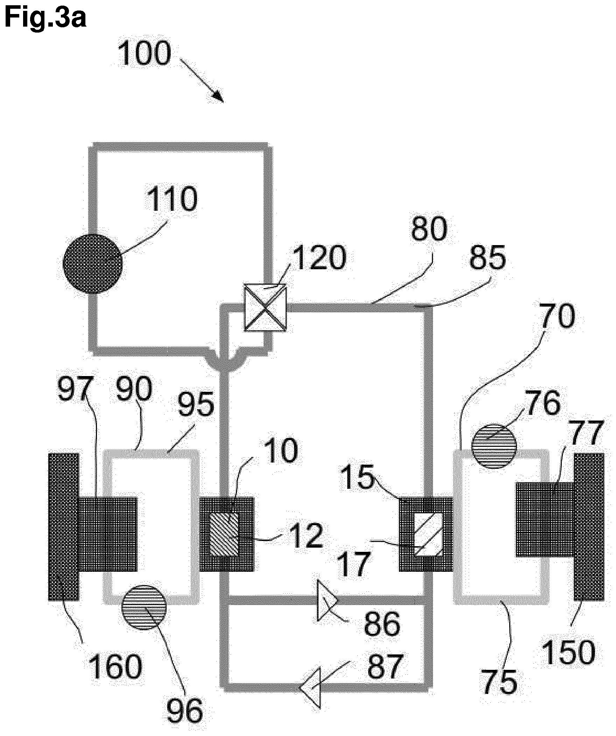

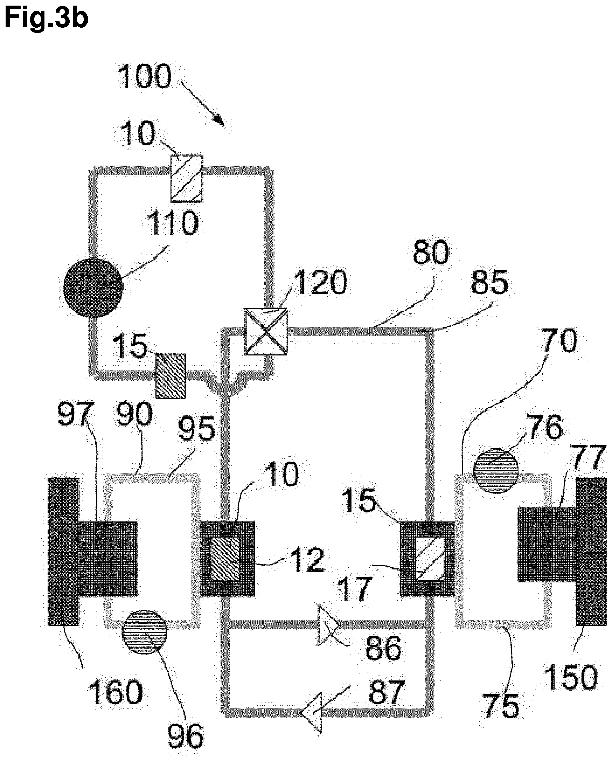

Die relevanten Daten wie molare Masse, Dichte, Schmelztemperatur (dies ist die Phasenübergangstemperatur), Wärmespeicherkapazität und Wärmeleitfähigkeit sind in Fig. 3 gezeigt. Eine Kombination der verschiedenen Ausführungsformen ist möglich.

Sowohl die Implementierung eines ersten Fluidkreislaufes 70 und/oder zweiten Fluidkreislaufes 90 als auch eines Verbindungselementes zur Integration wenigstens einer Wärmequelle und/oder -senke bedeuten keine Einschränkung hinsichtlich des Phasenwechselmaterials in den Wärmespeichern 10, 15 oder auch des als Kältemittel dienenden ersten Fluides 85.

Das erfindungsgemäße Temperaturregulationssystem 100 ist besonders dafür geeignet in Fahrzeugen verwendet zu werden. Fahrzeuge mit dem erfindungsgemäßen Temperaturregulationssystem 100 weisen durch die größere Flexibilität bei der Nutzung von Beheizung- oder Klimatisierungsvorrichtungen eine höhere Energieeffizienz auf. Insbesondere bei Fahrzeugen mit elektrischem Antrieb führt dies zu einer höheren Reichweite.

### Verwendete Phasenwechselmaterialien

Die Auswahl geeigneter Phasenwechselmaterialien (PCM) richtet sich nach den thermophysikalischen, technischen sowie ökonomischen und ökologischen Anforderungen. Das Gesamtsystem sollte bei allen zu erwartenden Umgebungstemperaturen zumindest die richtigen Temperaturen zur Beheizung und Kühlung von Fahrgastzelle und Batterie liefern. Erforderlich ist ebenfalls eine hohe Energiedichte - sowohl auf die Masse als auch auf das Volumen bezogen. Darüber hinaus sollte es nicht toxisch, brennbar oder korrosiv sein. Da die thermische Energiespeicherung des Temperaturregulationssystems in Konkurrenz zur herkömmlichen elektrischen Speicherung steht, sollte die Verfügbarkeit der Speichermaterialien, der Kühl- und der Kältemittel sehr groß sein, damit überschaubare Gesamtsystemkosten erzielbar sind. Hydroxide, Carbonate, Chloride, Fluoride oder Salzhydrate sind unter diesen Gesichtspunkten weniger geeignet.

Als Phasenwechselmaterial für den Wärmespeicher 10 wurde Wasser gewählt, das mit 333,5 kJ/kg eine hohe Schmelzenthalpie aufweist. Für die Füllung des Wärmespeichers 15 wurde zunächst Palmitinsäure (C₁₆H₃₂O₂) ausgesucht. Palmitinsäure ist eine ungiftige, farblose, bei Zimmertemperatur feste Substanz. Es ist eine der in tierischen und pflanzlichen Fetten am häufigsten vorkommende Fettsäure. Palmitinsäure wird als Grundstoff in Kosmetikprodukten verwendet. In Fig. 3 sind die Stoffdaten dieser und der weiteren relevanten Phasen-wechselmaterialien dargestellt. Es steht also eine Differenz von ca. 60 K zwischen den Phasenwechseltemperaturen dieser beiden Materialien zur Verfügung. Die spezifischen Schmelzenthalpien und die Phasenwechsel-Temperaturen versprechen gute Möglichkeiten sowohl zur Beheizung als auch zur Kühlung. Allerdings fällt bereits bei der Analyse der Stoffdaten auf, dass die stark unterschiedliche Dichte in der festen und der flüssigen Phase problematisch sein kann.

### Bestimmung der rheologischen Eigenschaften möglicher PCS

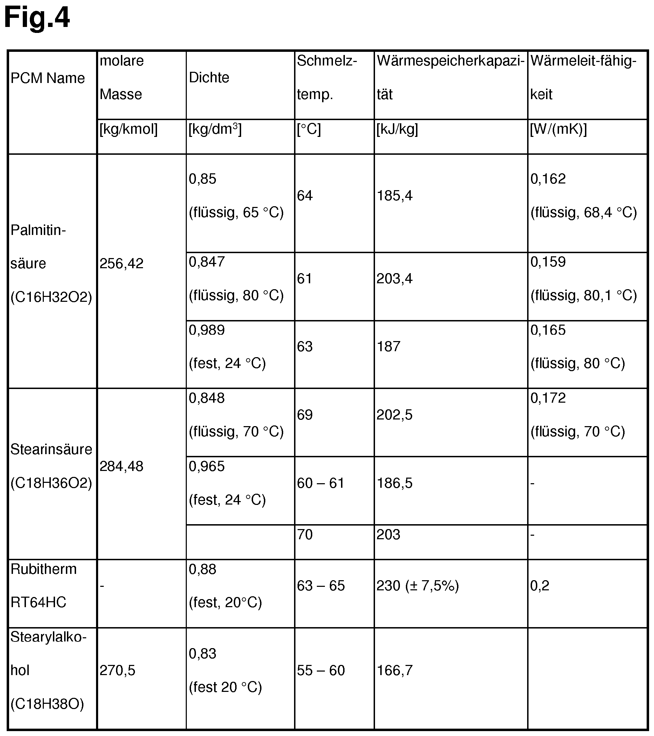

Da die in den Heiz- und Kühlkreisen verwendeten Fluide (PCS) ständig erhitzt, abgekühlt und gepumpt werden, unterliegt die Verkapselung hohen thermischen und mechanischen Beanspruchungen. Nur wenige verkapselte PCM mit Phasenwechseltemperaturen, die für die hier vorgestellte Anwendung geeignet sind, sind bekannt. So sind auch die für diese Verwendung äußerst relevanten rheologischen Eigenschaften weitgehend unbekannt. Mit dem Phasenwechselmaterial Rubitherm RT 64 HC wurden bereits positive Erfahrungen gemacht und es ist auch in mikroverkapselter Form verfügbar. Die Angaben des Herstellers des PCS (Fig. 4) basierend auf dem genannten reinen PCM sind nicht abschließend und sie berücksichtigen weder alle relevanten Temperaturbereiche noch alle verwendeten Konzentrationen. Sie stellen aber eine hinreichend gute Näherung für die Verwendung dieser Stoffe da.

### Ausführungsbeispiel

In einem Ausführungsbeispiel des erfindungsgemäßen Temperaturregulationssystems 100 umfasst dies eine Wärmepumpe mit zwei Wärmespeichern 10, 15 für den Einbau in die Klimaanlage eines Fahrzeugs. Die Wärmespeicher 10, 15 können einen Phasenwechsel auf unterschiedliche Temperaturniveaus vornehmen: Es gibt dabei in diesem Beispiel einen ersten Wärmespeicher 10 gefüllt mit Material mit einer niedrigen Phasenwechseltemperatur unter 30 °C und einen Wärmespeicher 15 mit einem Material mit höherer Phasenwechseltemperatur von über 30 °C. Der erste Wärmespeicher 10 wird im Heizbetrieb als Verdampfer eingesetzt der zweite Speicher 15 als Kondensator. In diesen Wärmespeichern 10, 15 befinden sich jeweils mindestens ein Wärmeübertrager 12, 17 der die Wärme aus dem als Kältemittel dienenden ersten Fluid 85 in ein drittes Fluid 95 (hier die Umgebungsluft) oder umgekehrt überträgt. Der zweite Wärmspeicher 15 ist sowohl mit dem Kältemittel-80 als auch über den zweiten Wärmeübertrager 17 mit einem Fluidkreislauf 70 verbunden. Zur Druckerhöhung dient der Verdichter 110. Der Druck wird abgebaut über die Expansionsventile 86 und/oder 87. Beide Elemente sind regelbar, falls die Wärmefreisetzung aus dem ersten Fluid 85 das erfordert. Die Gewichtung der Wärmefreisetzung aus den beiden Wärmespeichern 10 und 15 richtet sich nach dem Ladungssollzustand des ersten Wärmespeichers 10. Kann der erster Wärmespeicher 10 entleert werden, so ist die Wärmeabfuhr aus dem Fluidkreislauf 70 vorzuziehen und der Luftkondensator wird möglichst wenig genutzt. Der Wärmeeintrag aus dem Kältemittelkreislauf 80 in den ersten Wärmespeicher 10 kann im Heizbetrieb weiterhin erfolgen, ist allerdings wegen der verzögerten Wärmeübertragung nur wenig sinnvoll. Die beiden Speicher 10 und 15 können immer nur gleichzeitig einer be- und der andere entladen werden. Daher sind vor bzw. nach der Expansion jeweils zwei Wärmeübertrager in Reihe vorzusehen. Damit kann der Wärmeeintrag bzw. -austrag zwischen den PCM und der Luft gewichtet werden.

Soll der Wärmespeicher 15 gefüllt werden, so ist der Fluidkreislauf 70 möglichst anzuhalten. Die Wärmeversorgung der Verbraucher (z.B. in der Fahrgastzelle) erfolgt dann über den Wärmeübertrager 12. Die Beladung des ersten Wärmespeichers 10 über den Kältemittelkreislauf 80 ist abhängig von der Temperatur auf der Verdampferseite. Steht viel Wärme zur Verfügung, kann die Beladung mit großer Leistung erfolgen. Wird die Kältemitteltemperatur am ersten Wärmespeicher 10 geringer, kann der Einbau eines Verflüssigungsdruckreglers Abhilfe schaffen. Wird dagegen der Kältemittelmassenstrom geringer, da der Verdichter eine größer werdende Differenz zwischen den Verdampfungs- und dem Verflüssigungsdruck überwinden muss, so muss die Wärmeabfuhr über den Luftkondensator reduziert werden. Das kann über eine Bypassleitung, über eine Drehzahlabsenkung des Kondensatorgebläses oder über eine Teilabdeckung der Wärmeübertragungsflächen erfolgen.

Wenn absehbar ist, dass das Fahrzeug während der Fahrt beheizt werden muss, sollten zur Erzielung einer möglichst großen Reichweite beide Speicher vor Fahrtantritt auf Temperaturen oberhalb der Phasenwechseltemperatur des Materials im Speicherkondensator vorgeheizt werden.

### Abbildungslegenden und Bezugszeichenliste

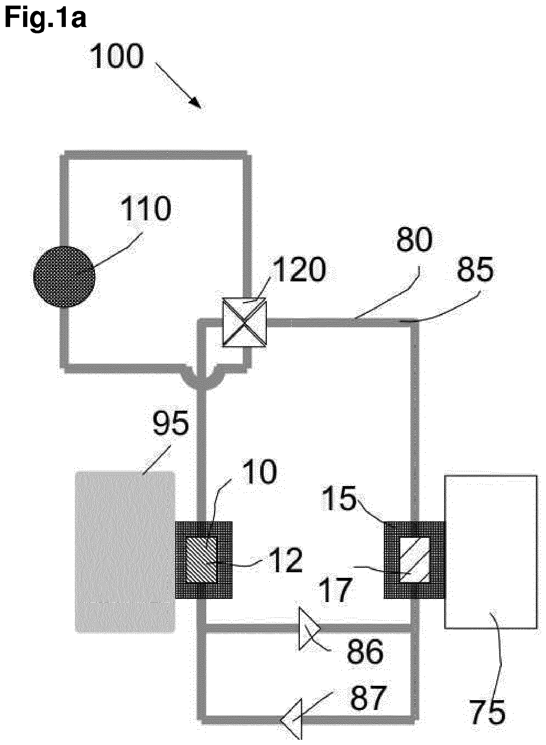

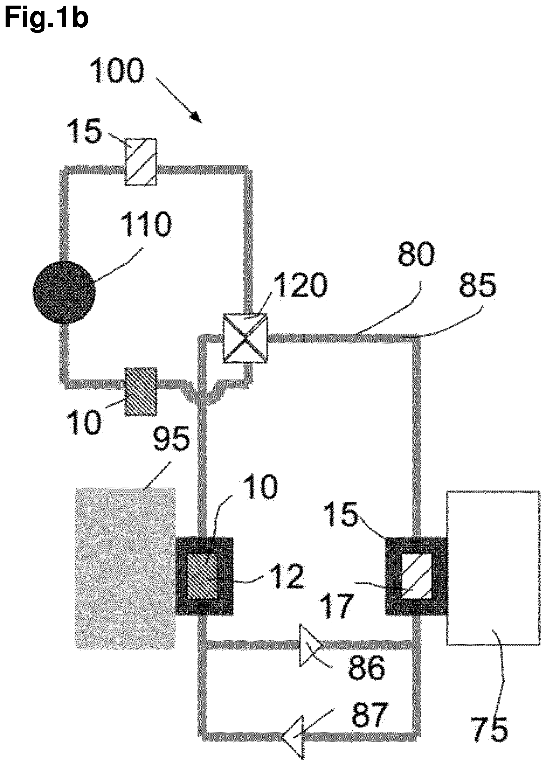

Fig. 1a und Fig. 1b schematische Darstellung eines nicht erfindungsgemäßen Temperaturregulationssystems 100

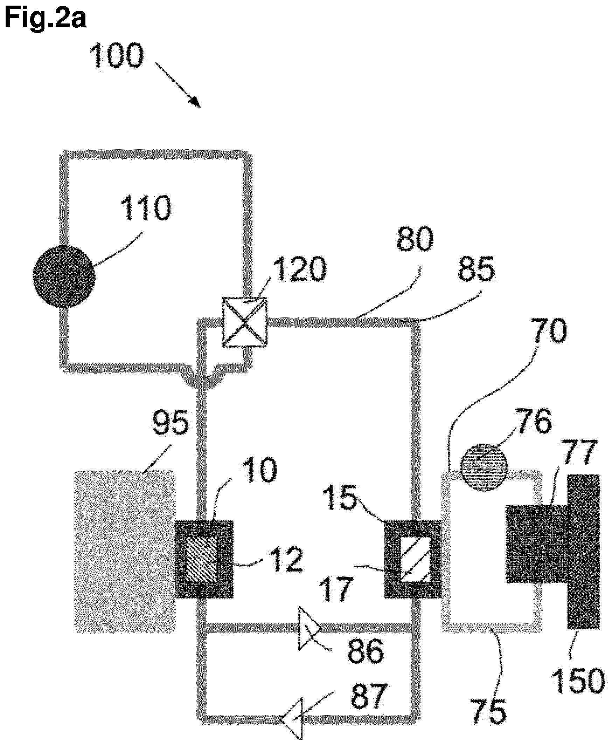

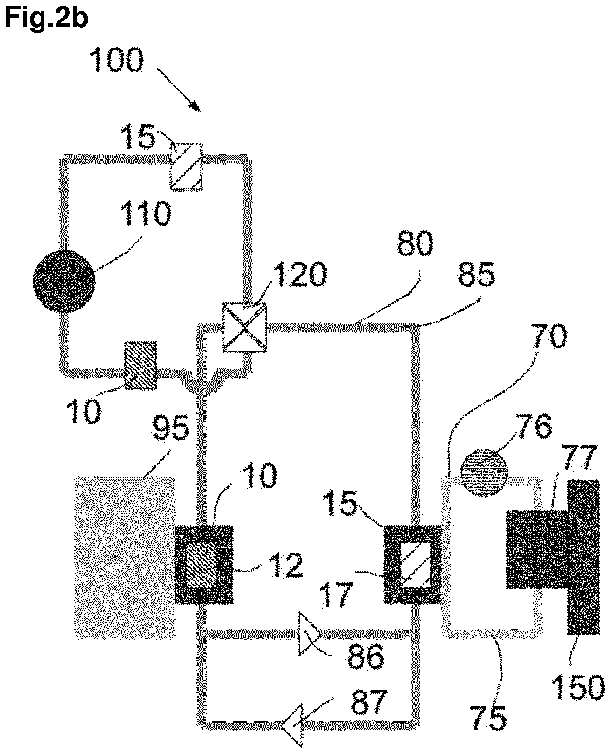

Fig. 2a und Fig. 2b schematische Darstellung einer Ausführungsform des erfindungsgemäßen Temperaturregulationssystems 100
Fig. 3a und Fig. 3b schematische Darstellung einer weiteren Ausführungsform des erfindungsgemäßen Temperaturregulationssystems 100
Fig. 4 Stoffdaten der gewählten Phasenwechselmaterialien

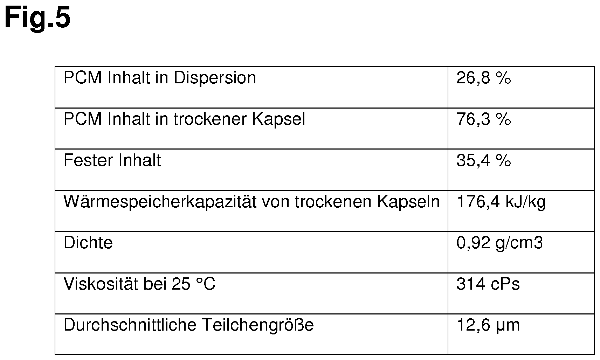

Fig. 5 Eigenschaften des verkapselten unverdünnten PCS RT64HC (Herstellerangaben)

### Bezugszeichenliste

100 Temperaturregulationssystem
10 ersten Wärmespeicher
12 erster Wärmeübertrager
15 zweiter Wärmespeicher
17 zweiter Wärmeübertrager
70 erster Fluidkreislauf
75 zweites Fluid
76, 96 Umwälzpumpe
77, 97 Wärmeübertrager
80 Kältemittelkreislauf (linksdrehender Kreisprozess)
85 erstes Fluid
86 erstes Expansionsventil
87 zweites Expansionsventil
90 zweiter Fluidkreislauf
95 drittes Fluid
110 Verdichter
120 Vierwegeumschaltventil
150 erste externe Wärmequelle/Wärmesenke
160 zweite externe Wärmequelle/Wärmesenke

## Patentansprüche

1. Temperaturregulationssystem (100) zur Regulation des Wärmeflusses für Fahrzeuge mit einen Kältemittelkreislauf (80), geeignet zur Verwendung mit einem als Kältemittel dienenden ersten Fluid (85) wobei der Kältemittelkreislauf (80) wenigstens einen ersten Wärmespeicher (10), enthaltend ein Phasenwechselmaterial mit einer Phasenwechseltemperatur von unter 30 °C und wenigstens einen zweiten Wärmespeicher (15) enthaltend ein Phasenwechselmaterial mit einer Phasenwechseltemperatur von über 30 °C, sowie einen ersten Wärmeübertrager (12) und wenigstens einen weiteren Wärmeübertrager (17) umfasst, wobei der erste Wärmeübertrager (12) so ausgebildet ist, dass er einen Wärmetransfer zwischen dem Kältemittelkreislauf (80) und einem dritten Fluid (95) ermöglicht, und wobei der zweite Wärmeübertrager (17) so ausgebildet ist, dass er einen Wärmetransfer zwischen dem Kältemittelkreislauf (80) und einem zweiten Fluid (75) ermöglicht,
wobei der Kältemittelkreislauf (80) weiterhin Steuerungsmittel (86, 87, 110, 120) umfasst, um die Richtung und die Stärke des Wärmetransfers zwischen dem ersten Wärmeübertrager (12) und dem zweiten Wärmeübertrager (17) einzustellen, sodass der Kältemittelkreislauf (80) einen steuerbaren und reversibel betreibbaren Wärmetransfer zwischen dem zweiten Fluid (75) und dem dritten Fluid (95) durchführen kann **dadurch gekennzeichnet, dass** das Temperaturregulationssystem (100) weiterhin wenigstens einen ersten Fluidkreislauf (70) umfasst, der so ausgebildet ist, dass er geeignet zur Aufnahme des zweiten Fluides ist und / oder dass, das Temperaturregulationssystem (100) weiterhin einen zweiten Fluidkreislauf (90) umfasst, welcher geeignet zur Aufnahme des dritten Fluides (95) ist,
wobei wenigstens einer der Fluidkreisläufe (70, 90) eine Phasenwechselmaterial-Emulsion als Phasenwechselmaterial enthält.

2. Temperaturregulationssystem (100) gemäß Anspruch 1 **dadurch gekennzeichnet, dass** der Kältemittelkreislauf 80 wenigstens ein Verbindungselement zur Integration wenigstens einer Wärmequelle und/oder Wärmesenke umfasst, wobei das Verbindungselement dabei so ausgebildet ist, dass es thermisch mit dem Kältemittelkreislauf (80) gekoppelt ist.

3. Temperaturregulationssystem (100) gemäß einem der Ansprüche 1 oder 2 **dadurch gekennzeichnet, dass** es Kohlenstoffdioxid als erstes Fluid (85) umfasst.

4. Temperaturregulationssystem (100) gemäß einem der Ansprüche 1 bis 3 **dadurch gekennzeichnet, dass** wenigstens einer der Wärmespeicher (10,15) wenigstens ein Phasenwechselmaterial aus der Gruppe: Palmitinsäure, Stearinsäure, Rubitherm (RT64HC), Stearylalkohol enthält.

5. Fahrzeug, **dadurch gekennzeichnet, dass** es ein Temperaturregulationssystem (100) gemäß einem der vorigen Ansprüche umfasst.

## Claims

1. Temperature regulation system (100) for regulating heat flow for vehicles comprising a refrigerant circuit (80) suitable for use with a first fluid (85) serving as a refrigerant, the refrigerant circuit (80) comprising at least one first heat accumulator (10) containing a phase change material having a phase change temperature below 30°C and at least one second heat accumulator (15) containing a phase change material having a phase change temperature above 30°C, as well as a first heat exchanger (12) and at least one further heat exchanger (17), wherein the first heat exchanger (12) is designed to enable heat transfer between the refrigerant circuit (80) and a third fluid (95), and wherein the second heat exchanger (17) is designed to enable heat transfer between the refrigerant circuit (80) and a second fluid (75),
wherein the refrigerant circuit (80) further comprises control means (86, 87, 110, 120) for adjusting the direction and the amount of heat transfer between the first heat exchanger (12) and the second heat exchanger (17), so that the refrigerant circuit (80) can perform a controllable and reversibly operable heat transfer between the second fluid (75) and the third fluid (95), **characterized in that** said temperature regulation system (100) further comprises at least a first fluid circuit (70) adapted to receive said second fluid and/or that, said temperature regulation system (100) further comprises a second fluid circuit (90) adapted to receive said third fluid (95),
wherein at least one of the fluid circuits (70, 90) contains a phase change material emulsion as phase change material.

2. Temperature regulation system (100) for vehicles according to claim 1, **characterized in that** the refrigerant circuit (80) comprises at least one connection element for integrating at least one heat source and/or heat sink, wherein the connection element is thereby configured to be thermally coupled to the refrigerant circuit (80).

3. Temperature regulation system (100) according to one of claims 1 or 2 **characterized in that** it comprises carbon dioxide as first fluid (85).

4. Temperature regulation system (100) according to any one of claims 1 to 3 **characterized in that** at least one of the heat accumulators (10,15) comprises at least one phase change material selected from the group consisting of: palmitic acid, stearic acid, rubitherm (RT64HC), stearyl alcohol.

5. Vehicle **characterized in that** it comprises a temperature regulation system (100) according to any of the preceding claims.

## Revendications

1. Système de régulation de température (100) pour réguler le flux de chaleur pour des véhicules comprenant un circuit de réfrigérant (80) adapté pour être utilisé avec un premier fluide (85) servant de réfrigérant, le circuit de réfrigérant (80) comprenant au moins un premier accumulateur de chaleur (10) contenant un matériau à changement de phase ayant une température de changement de phase inférieure à 30°C et au moins un deuxième accumulateur de chaleur (15) contenant un matériau à changement de phase ayant une température de changement de phase supérieure à 30°C, ainsi qu'un premier échangeur de chaleur (12) et au moins un autre échangeur de chaleur (17), le premier échangeur de chaleur (12) étant conçu de manière à permettre un transfert de chaleur entre le circuit de réfrigérant (80) et un troisième fluide (95), et le deuxième échangeur de chaleur (17) étant conçu de manière à permettre un transfert de chaleur entre le circuit de réfrigérant (80) et un deuxième fluide (75), le circuit de réfrigérant (80) comprenant en outre des moyens de commande (86, 87, 110, 120) pour ajuster la direction et l'intensité du transfert de chaleur entre le premier échangeur de chaleur (12) et le deuxième échangeur de chaleur (17), de sorte que le circuit de réfrigérant (80) peut effectuer un transfert de chaleur contrôlable et réversible entre le deuxième fluide (75) et le troisième fluide (95), **caractérisé en ce que** le circuit de réfrigérant (80) comprend en outre des moyens de commande (86, 87, 110, 120) pour ajuster la direction et l'intensité du transfert de chaleur entre le premier échangeur de chaleur (12) et le deuxième échangeur de chaleur (17), **en ce que** le système de régulation de température (100) comprend en outre au moins un premier circuit de fluide (70) qui est conçu de manière à être approprié pour recevoir le deuxième fluide et/ou **en ce que** le système de régulation de température (100) comprend en outre un deuxième circuit de fluide (90) qui est approprié pour recevoir le troisième fluide (95),
dans lequel au moins l'un des circuits de fluide (70, 90) contient une émulsion de matériau à changement de phase en tant que matériau à changement de phase.

2. Système de régulation de température (100) pour véhicules selon la revendication 1, **caractérisé en ce que** le circuit de fluide frigorigène 80 comprend au moins un élément de liaison pour l'intégration d'au moins une source de chaleur et/ou d'un puits de chaleur, l'élément de liaison étant alors conçu de telle sorte qu'il est couplé thermiquement au circuit de fluide frigorigène (80).

3. Système de régulation thermique (100) selon l'une des revendications 1 ou 2, **caractérisé en ce qu'**il comprend du dioxyde de carbone comme premier fluide (85).

4. Système de régulation thermique (100) selon l'une des revendications 1 à 3, **caractérisé en ce qu'**au moins l'un des accumulateurs de chaleur (10, 15) contient au moins un matériau à changement de phase choisi dans le groupe : acide palmitique, acide stéarique, rubitherm (RT64HC), alcool stéarylique.

5. Véhicule, **caractérisé en ce qu'**il comprend un système de régulation thermique (100) selon l'une des revendications précédentes.
